(19) **Europäisches Patentamt / European Patent Office / Office européen des brevets**

(11) **EP 2 539 558 B1**

(12) **FASCICULE DE BREVET EUROPEEN**

(45) Date de publication et mention
de la délivrance du brevet:
**03.12.2014 Bulletin 2014/49**

(21) Numéro de dépôt: **11707889.9**

(22) Date de dépôt: **03.02.2011**

(51) Int Cl.:
*F01N 3/08* [(2006.01)]    *F01N 3/20* [(2006.01)]
*F01N 9/00* [(2006.01)]    *F01N 11/00* [(2006.01)]
*F01N 3/021* [(2006.01)]

(86) Numéro de dépôt international:
**PCT/FR2011/050219**

(87) Numéro de publication internationale:
**WO 2011/104458 (01.09.2011 Gazette 2011/35)**

(54) **PROCEDE DE CONTROLE DES EMISSIONS POLLUANTES D'UN MOTEUR A COMBUSTION**

VERFAHREN ZUR KONTROLLE DER SCHADSTOFFEMISSIONEN AUS EINEM VERBRENNUNGSMOTOR

METHOD FOR CONTROLLING THE POLLUTANT EMISSIONS OF A COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2010 FR 1051319**

(43) Date de publication de la demande:
**02.01.2013 Bulletin 2013/01**

(73) Titulaire: **Peugeot Citroën Automobiles SA
78140 Vélizy Villacoublay (FR)**

(72) Inventeurs:
• **GRISE, Clément**
 **F-75011 Paris (FR)**
• **CHARIAL, Christophe**
 **F-78000 Versailles (FR)**

(74) Mandataire: **Renous Chan, Véronique
Peugeot Citroen Automobiles SA
Propriété Industrielle - LG081
18 rue des Fauvelles
92250 La Garenne Colombes (FR)**

(56) Documents cités:
**WO-A2-2009/135071    US-A1- 2009 158 710**

**Description**

La présente invention concerne un procédé de contrôle des émissions polluantes d'un moteur à combustion.

L'utilisation de combustible fossile comme le pétrole ou le charbon dans un système de combustion, en particulier le carburant dans un moteur, entraine la production en quantité non négligeable de polluants qui peuvent être déchargés par l'échappement dans l'environnement et y causer des dégâts. Parmi ces polluants, les oxydes d'azote (appelés $NO_x$) posent un problème particulier puisque ces gaz sont soupçonnés d'être un des facteurs qui contribuent à la formation des pluies acides et à la déforestation. En outre, les $NO_x$ sont liés à des problèmes de santé pour les humains et sont un élément clé de la formation de « smog » (nuage de pollution) dans les villes. La législation impose des niveaux de rigueur croissante pour leur réduction et/ou leur élimination de sources fixes ou mobiles.

Parmi les polluants que les législations tendent à réglementer de façon de plus en plus stricte figurent également les suies ou autres matériaux particulaires résultant essentiellement d'une combustion incomplète du carburant, plus particulièrement lorsque le moteur est opéré en mélange dit pauvre, c'est-à-dire avec un excédent d'oxygène (d'air) par rapport à la stoechiométrie de la réaction de combustion. Les mélanges pauvres sont de règle pour les moteurs dits diesel, dont l'allumage est obtenu par compression.

Pour ces deux grandes catégories de polluants, différents moyens de dépollution et stratégies de combustion sont mis en oeuvre.

Pour limiter les émissions de particules, la technologie des filtres à particules se généralise peu à peu pour tous les véhicules équipés d'un moteur diesel. Cette technologie consiste essentiellement à forcer le passage des gaz d'échappement à travers des canaux poreux d'une structure nid d'abeille en céramique. Les suies ainsi filtrées s'accumulent puis sont éliminées dans une opération de régénération du filtre pendant laquelle elles sont brûlées. Pour obtenir cette régénération, il est toutefois nécessaire d'augmenter la température des gaz d'échappement, ce qui est typiquement obtenu en enrichissant ceux-ci avec du carburant (injecté directement dans la ligne d'échappement ou dans la chambre de combustion du moteur, pendant la phase d'échappement du cycle de combustion) et/ou en augmentant la charge du moteur. Par ailleurs, un agent catalytique est utilisé pour faciliter la combustion des suies, cet agent étant soit déposé de façon permanente dans les canaux du filtre, soit introduit comme additif avec le carburant, cette dernière technologie permettant d'opérer avec des températures de combustion plus basses que celles requises avec des filtres catalysés.

Pour limiter les émissions de $NO_x$, la principale voie mise en oeuvre sur les véhicules actuels a été celle de la réduction des émissions à la source, autrement dit, en opérant le moteur dans des conditions telles que les taux de $NO_x$ produits soient inférieurs aux taux limites. Ces conditions sont réunies notamment en pilotant de manière très fine les différents paramètres du moteur, à commencer par les paramètres d'injection de carburant et de réinjection à l'admission d'une partie des gaz d'échappement, ceci afin de réduire la concentration en oxygène favorable à la formation des oxydes d'azote.

Toutefois, il n'est pas possible de réduire drastiquement les émissions à la source sans limiter certaines performances du moteur. C'est pourquoi il a été proposé différentes solutions pour dénitrifier les gaz d'échappement. Une solution ayant fait la preuve de son efficacité notamment pour les poids lourds est la conversion chimique par réduction des oxydes d'azote au moyen d'un agent réducteur directement injecté dans la ligne d'échappement. Ainsi, une solution de post-traitement ayant fait la preuve de son efficacité est l'utilisation d'une source d'ammoniac ($NH_3$), telle que l'urée aqueuse. L'ammoniac réagit avec les $NO_x$ sur un catalyseur pour former de l'azote $N_2$ inerte et de l'eau $H_2O$. Cette solution est essentiellement connue sous le nom de son acronyme anglais SCR pour « Selective Catalytic Reduction », comme décrit dans le document WO2009/135071.

Un réducteur communément utilisé est de l'ammoniac, stocké sous forme d'urée, l'ammoniac étant obtenu par thermolyse/ hydrolyse de l'urée dans la ligne d'échappement selon les réactions suivantes :

$$(NH_2)_2CO \quad HNCO + NH_3 : \text{thermolyse à 120°C} \qquad (1)$$

$$HNCO + H2O \rightarrow CO_2 + NH_3 : \text{hydrolyse à 180°C} \qquad (2)$$

Le catalyseur SCR sert ensuite à favoriser la réduction des NOx par $NH_3$ selon les 3 réactions suivantes:

$$4NH_3 + 4NO + O_2 \rightarrow 4N_2 + 6H_2O \qquad (3)$$

$$2NH_3 + NO + NO_2 \rightarrow 2N_2 + 3H_2O \qquad (4)$$

$$8NH_3 + 6NO_2 \rightarrow 7N_2 + 12H_2O \qquad (5)$$

L'ammoniac étant lui-même un gaz considéré comme toxique, il importe que la quantité d'urée injectée soit à tout moment adaptée à la quantité d'oxydes d'azote à traiter.

Un simple contrôle en boucle fermé essentiellement basé sur l'information fournie par un capteur de $NO_x$ disposé en aval du piège à $NO_x$ est exclu pour un moteur opérant de façon prédominante en régimes transitoires, comme un moteur d'un véhicule automobile.

La quantité de $NO_x$ peut toutefois être estimée notamment sur la base d'une cartographie des émissions d'oxydes d'azote en fonction notamment des conditions de fonctionnement du moteur, autrement dit, essentiellement en fonction de la demande de régime et de couple.

Une difficulté majeure des systèmes de traitement des $NO_x$ par réduction sélective est d'obtenir une efficacité nominale de traitement des $NO_x$ en fonction de la dispersion des véhicules produits. Il a été proposé un modèle permettant de prédire à tout instant l'efficacité d'un système de traitement des $NO_x$, et de la comparer avec l'efficacité observée.

Avec un système SCR, à tout instant l'ammoniac disponible pour la réaction de réduction n'est pas directement celui qui est injecté directement sous forme d'ammoniac ou sous la forme d'un précurseur à l'exemple de l'urée, mais celui qui est stocké à cet instant donné dans le catalyseur. Plus la température des gaz d'échappement augmente, moindre sera la capacité du catalyseur à stocker de l'ammoniac, une réaction de désorption concurrençant la réaction d'adsorption. En revanche, cette augmentation de la température tend à favoriser la cinétique de la réaction, et donc à favoriser les réactions de réduction. Dans ces conditions, une parfaite maîtrise des émissions est difficile à obtenir.

Un défaut d'efficacité est donc typiquement dû à un chargement du catalyseur non conforme qui doit être corrigé par une correction du modèle de chargement de l'ammoniac dans le catalyseur pour recaler le modèle. C'est pourquoi la présente invention a pour but une méthode de supervision des corrections du modèle de chargement d'un catalyseur de réduction sélective.

Selon l'invention, il est ainsi proposé un procédé de contrôle d'un système de traitement des $NO_x$ présents dans des gaz d'échappement d'un moteur à combustion interne, ledit système comportant des moyens pour introduire dans la ligne d'échappement un agent réducteur en amont d'un catalyseur de réduction des $NO_x$, ledit procédé comportant un contrôle en boucle ouverte de l'injection, une estimation de l'efficacité du traitement et la comparaison de celle-ci par rapport à un potentiel de conversion maximale obtenu si le rapport entre la quantité de réducteur injectée et la quantité de $NO_x$ dans les gaz respecte une consigne donnée et si la masse d'agent réducteur stockée dans le catalyseur respecte une consigne de stockage donnée, caractérisé en ce que si un défaut du traitement est observé et si des conditions de correction sont remplies, on déclenche une correction en boucle fermée de la consigne de stockage de réducteur.

En d'autres termes, l'injection de réducteur est opérée sur la base d'une cartographie qui, en fonction notamment de paramètres de fonctionnement du moteur, des conditions thermiques dans la ligne d'échappement et de la quantité de réducteur stockée à un moment donné dans le catalyseur, définit la quantité de réducteur qui est injectée. A l'aide d'un modèle adapté, on estime alors la conversion attendue, et on compare cette conversion maximale à l'efficacité observée. Tout écart significatif (positif ou négatif) est un défaut. Selon l'invention, il est alors proposé de quitter le mode de régulation en boucle ouverte pour passer à un mode de régulation temporaire, en boucle fermée, qui va permettre d'ajuster le modèle d'injection.

Ce passage en mode en boucle fermée est toutefois subordonné à l'identification de conditions environnementales permettant à la fois de valider la lecture de l'efficacité et de déclencher la correction dans des conditions garantissant une certaine stabilité des émissions de $NO_x$ tant que l'on opère en boucle fermée, évitant ainsi de devoir interrompre le mode correctif avant une validation de la correction, ou pire, de se placer dans des conditions où le risque de dérive serait grand (avec alors un fort risque d'émissions polluantes et/ou de surconsommation de réducteur et/ou de rejet d'agent réducteur en bout de ligne et alors une nouvelle pollution par l'ammoniac).

Les conditions environnementales peuvent notamment comprendre une température du catalyseur de réduction sélective comprise dans une plage de référence donnée. En effet, si la température du catalyseur est en deçà d'une température minimale, le comportement du système n'est pas optimum de sorte qu'il est vain de chercher à corriger la cartographie d'injection dans ces conditions. Il en est de même si la température excède une température critique au-delà de laquelle existe un risque de désorption spontanée du réducteur.

Ces conditions environnementales peuvent également comprendre des données propres aux conditions de fonctionnement du moteur, comme un régime moteur supérieur à un régime minimal (notamment pour éviter de lancer une correction lors d'un passage en mode ralenti), une vitesse du véhicule supérieure à une vitesse minimale donnée et/ou un couple compris entre un couple minimal (pour éviter de lancer une requête de correction lors d'une levée de pied de la pédale d'accélérateur) et un couple maximal (pour éviter les phases de très grande accélération). Ainsi, en se plaçant dans des conditions environnementales relativement stables, on s'assure que les émissions de $NO_x$ sont également relativement stables ce qui permet de garantir une lecture robuste de l'efficacité.

Avantageusement, les conditions de couple ne sont validées que si le couple moteur reste supérieur à la valeur de seuil minimal et/ou inférieur à la valeur de couple maximal pendant une durée prédéfinie, par exemple comprise entre 3 et 7s, et typiquement de l'ordre de 5s.

Par ailleurs, il peut être prévu parmi les conditions environnementales la vérification de ce que le système n'est pas dans un état de non interdiction manuelle, ce qui peut être le cas si le système SCR (ou plus exactement de contrôle du fonctionnement du système) est muni de moyens pour forcer la désactivation, par exemple lors d'une opération de test en vue de la maintenance du système.

Dans une variante tout particulièrement préférée, l'autorisation de passage en mode correctif est également subordonnée à l'écoulement d'une durée minimale depuis l'arrêt d'une requête de la dernière requête de correction, ce qui permet de garantir que le système ne se place pas dans en mode de régulation par boucle fermée de façon permanente.

D'autres détails et caractéristiques avantageuses de l'invention ressortent de la description détaillée faite ci-après en référence aux figures annexées qui montrent :

- Figure 1 : une vue schématique d'un moteur et de sa ligne de traitement des gaz d'échappement ;

- Figure 2: l'allure de la variation de l'efficacité d'un catalyseur SCR en fonction de sa charge en ammoniac ;

- Figure 3: un logigramme illustrant le principe du procédé selon l'invention ;

- Figure 4 : des schémas montrant sur une même échelle de temps, les demandes de régulation (fig. 4A), l'état des conditions environnementales (fig. 4B), et le mode d'opération en régulation ou non (fig. 4C) ;

- Figure 5 : un logigramme illustrant la vérification des conditions environnementales.

Il est précisé que par oxydes d'azote $NO_x$ on entend les deux composés azotés dont les émissions sont réglementées à savoir le monoxyde d'azote et le dioxyde d'azote, produits notamment par des moteurs fonctionnant en mélange pauvre, c'est-à-dire avec un excès d'oxygène par rapport à la stoechiométrie de la réaction de combustion du carburant, à l'exemple notamment des moteurs à allumage par compression dits diesels.

Dans la description qui suit, par souci de clarté, il sera systématiquement fait l'hypothèse que l'agent réducteur est injecté tel quel dans la ligne d'échappement, en amont du catalyseur SCR. Ceci est par l'exemple le cas si cet agent de l'hydrogène ou de l'ammoniac stocké sous forme gazeuse ou produit dans un générateur idoine avant d'être introduit de façon contrôlée dans la ligne d'échappement. Toutefois, cet injecteur peut également être introduit sous la forme d'un précurseur, à l'exemple bien connu de l'urée, qui après une réaction de thermolyse et d'hydrolyse, se transforme en ammoniac (voir les équilibres 1 et 2 proposés plus haut).

De plus, on suppose que cet agent réducteur est effectivement de l'ammoniac, et par souci de clarté, la désignation ($NH_3$) est systématiquement dans la suite de la description, même si l'invention n'est pas limitée à ce mode de réalisation.

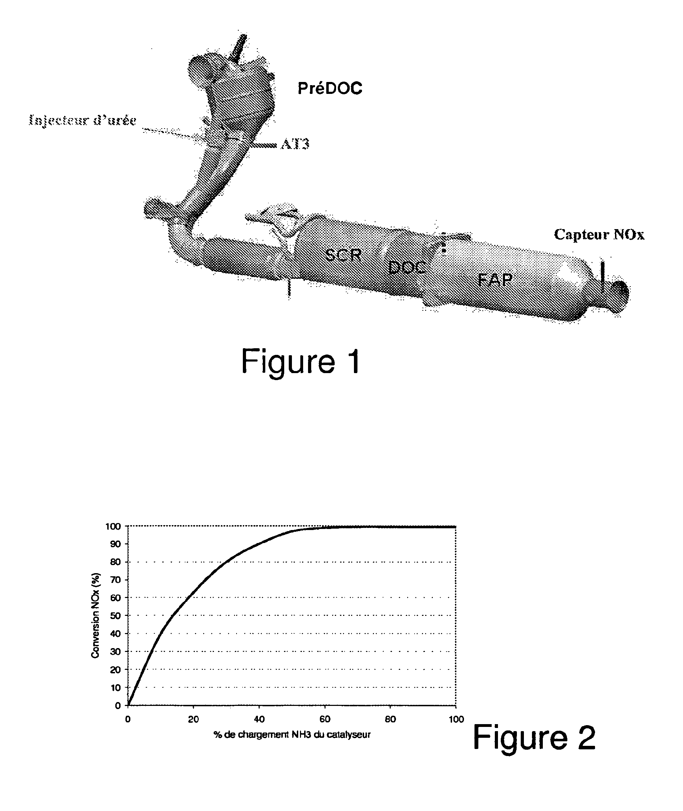

La figure 1 est une vue schématique d'un moteur et de sa ligne de traitement des gaz d'échappement. En entrée de ligne est disposé un catalyseur d'oxydation PréDOC dont le rôle premier est de convertir le monoxyde de carbone, et la fraction d'hydrocarbures gazeux non imbrûlée ou partiellement brûlée, en dioxyde de carbone, dans les chambres de combustion du moteur. Une telle disposition au plus près du moteur, donc dans la région la plus chaude de la ligne d'échappement garantit un maximum d'efficacité à ce catalyseur, mais n'entre pas dans le cadre spécifique de l'invention.

En continuant dans le sens des gaz d'échappement, on note la présence d'un capteur de température AT3 permettant d'estimer la température des gaz d'échappement en amont du système de traitement SCR.

Ce système de traitement est constitué essentiellement par un injecteur, relié à une source d'agent réducteur non représentée, et en aval de celle-ci, un catalyseur de réduction sélective, dit catalyseur SCR. De façon bien connue un tel catalyseur peut être constitué par une zéolithe déposée sur un support en céramique, par exemple du type cordiérite. Avec un tel catalyseur à base de zéolithe, la réaction de conversion des NO en $NO_2$ est très peu promue. Avec d'autres catalyseurs, contenant du platine ou du palladium, cette conversion sera par contre plus favorisée.

Si le réducteur n'est pas injecté directement sous sa forme finale, mais sous la forme d'un précurseur, à l'exemple d'une solution aqueuse d'urée, le système peut également comporter des moyens propres à faciliter le mélange du précurseur dans les gaz d'échappement tout en autorisant une architecture de ligne relativement compacte.

Sur cette ligne, on a également fait figurer un piège à particules FAP, disposé dans le cas présent en aval du catalyseur de réduction sélective et d'un catalyseur d'oxydation DOC, mais pouvant également être disposé en amont de l'injecteur.

Enfin, un capteur $NO_x$ est prévu afin de s'assurer que les émissions du véhicule sont toujours inférieures à une norme d'émission en vigueur.

La réduction catalytique des $NO_x$ par de l'ammoniac dans un catalyseur SCR consiste essentiellement dans la série des réactions numérotées (3) à (5) mentionnées plus haut, les $NO_x$ réagissant essentiellement avec l'ammoniac stocké dans le catalyseur à un moment donné.

A tout instant, on peut calculer l'efficacité du système, c'est-à-dire le rapport entre d'une part la différence entre la quantité de $NO_x$ émise par le moteur et celle émise par en bout de ligne, et d'autre part la quantité de $NO_x$ émise par

le moteur.

La quantité de $NO_x$ émise en bout de ligne est estimée à l'aide d'un capteur $NO_x$ monté en aval des dispositifs de traitement.

La quantité de $NO_x$ émise par le moteur peut être obtenue à partir d'une cartographie établie sur la base de mesures réelles des émissions en sortie de moteur, typiquement sur un banc moteur associé à une baie d'analyse chimique et quantificative des gaz d'échappement.

Lors de la phase de mise au point du moteur, on définit pour chaque point de fonctionnement du moteur (que l'on peut définir comme une demande de couple moteur à un régime moteur donné), un ensemble de paramètres moteurs optimisant la performance du véhicule et les émissions du véhicule. Parmi ces paramètres figurent par exemple la quantité de carburant injectée, la quantité d'air frais admise dans le moteur, les conditions d'injection du carburant, les instants d'ouverture des soupapes, le taux de recirculation des gaz d'échappement (EGR), etc. Ces paramètres sont transmis au contrôle moteur au moyen d'un jeu de cartographies qui se permettent de tenir compte de paramètres tels que la température extérieure, l'altitude (pour tenir compte de la raréfaction de l'oxygène), l'état de préchauffage du moteur, etc. Comme les émissions réglementées du véhicule sont prises en compte pour définir les paramètres moteurs, on va bien obtenir pour chaque point de fonctionnement du moteur, dans des conditions extérieures données, un débit massique instantané de $NO_x$ produit par ce moteur. Eventuellement, on peut également prévoir des cartographies pour des conditions de fonctionnement dégradées, par exemple dans l'hypothèse d'une absence de recirculation des gaz due à un disfonctionnement de la vanne EGR

Le système SCR a un fonctionnement nominal si cette efficacité constatée est conforme à un modèle théorique de ce système permettant de définir le potentiel de conversion maximal dans les conditions données. Il est proposé un modèle d'estimation de l'efficacité d'un système de traitement des $NO_x$ par rapport à un potentiel de conversion maximale obtenu si le rapport entre la quantité de réducteur injectée et la quantité de $NO_x$ dans les gaz respecte une consigne donnée et si la masse d'agent réducteur stockée dans le catalyseur respecte une consigne de stockage donnée.

La masse de réducteur stockée dans le catalyseur peut être estimée sur la base d'une cartographie de base fonction de la température des gaz d'échappement et du ratio $NO_2/NO$ des $NO_x$, par exemple en intégrant en fonction du temps la vitesse de stockage de l'ammoniac injecté dans la ligne et la vitesse de déstockage de l'ammoniac par réaction des $NO_x$, en posant comme conditions aux limites que cette masse ne peut être inférieure à 0, ladite vitesse de stockage pouvant être estimée uniquement dépendante de la quantité d'ammoniac injectée dans la ligne.

Pour la vitesse de déstockage, on peut avantageusement l'estimer en supposant que le ratio stoechiométrique $R_{NH3/NOx}$ de la réaction de conversion des NOx par l'ammoniac dépend du ratio $NO_2/NO$ des $NO_x$ de la façon suivante :

$$\text{Si } R_{NO2/NO} < 0,50 \text{ alors } R_{NH3/NOx} = 1$$

$$\text{Sinon } R_{NH3/NOx} = (1+8(R_{NO2/NO} - 0,50))/(1+6^*(R_{NO2/NO} - 0,50)).$$

Pour un type de catalyseur SCR donné, le potentiel de conversion maximale peut être estimé à partir d'une cartographie fonction de la température du catalyseur de réduction SCR et du ratio $NO_2/NO$ des $NO_x$ à l'entrée du catalyseur SCR, ratio qui peut être lui-même estimé à partir d'une cartographie en fonction de la température et du temps de séjour des gaz d'échappement dans un catalyseur d'oxydation en amont disposé dans la ligne d'échappement, en amont du catalyseur SCR.

Cette cartographie fonction du temps de séjour des gaz d'échappement dans le catalyseur d'oxydation DOC peut être corrigée par un facteur dépendant de l'état de vieillissement du catalyseur DOC, facteur qui peut lui-même être défini comme le rapport entre la durée cumulée d'exposition au-delà d'une première température critique provoquant une dégradation du catalyseur d'oxydation sur une durée de référence d'exposition à la première température critique, pour laquelle la dégradation du catalyseur est complète.

De ce qui précède, il ressort qu'il est possible à tout instant de prédire l'efficacité du système de traitement des $NO_x$, et de comparer cette valeur prédite à la valeur observée. La figure 2 montre la relation entre le chargement en ammoniac du catalyseur et le taux de conversion du traitement des $NO_x$.

Le mode de régulation de base est une régulation en boucle ouverte pour ajuster la masse d'ammoniac stockée dans le catalyseur SCR en fonction de la quantité de $NO_x$ produits par le moteur.

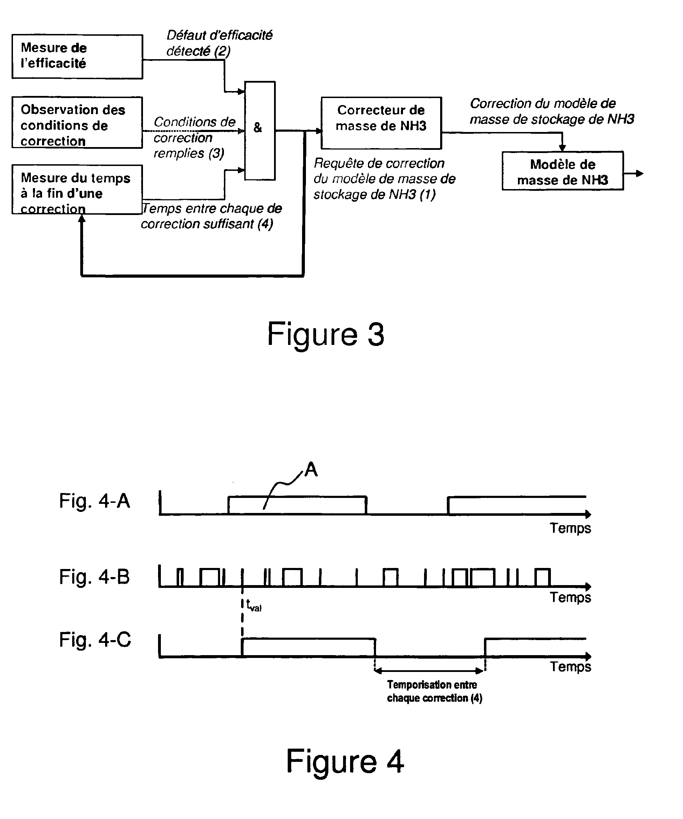

Nous allons maintenant décrire le mode de déclenchement d'une requête de régulation par passage temporaire en mode de régulation en boucle fermée, comme illustré à l'aide des figures 3 et 4.

L'efficacité du système de traitement des $NO_x$ est mesurée de façon oontinue, par exemple au moyen du capteur $NO_x$ en aval du catalyseur de réduction sélective, ce qui permet de détecter un défaut d'efficacité est détecté si un écart est constaté avec le modèle prévisionnel.

Dans la mesure où le défaut d'efficacité est lié à une dérive des moyens d'injection et/ou de la capacité de stockage du catalyseur, ce défaut va normalement perdurer, comme illustrer à la figure 4A, où est représenté en fonction de l'écoulement du temps, l'état (supposé binaire), d'un paramètre défaut détecté.

Pour corriger le défaut, et ajuster la consigne de stockage d'ammoniac, on effectue alors une demande d'autorisation d'une requête en correction. Cette demande d'autorisation identifie les conditions environnementales permettant de valider la lecture de l'efficacité et déclencher une correction de l'efficacité, et comme illustré aux figures 4B et 4C, le premier instant $t_{val}$ où ces conditions sont réunies après la détection du défaut. Il importe toutefois de noter que ces conditions environnementales ne sont pas suffisantes pour interrompre une requête de correction une fois celle-ci validée, et que comme illustrée figure 4B, les conditions environnementales peuvent en pratique être rarement réunies simultanément.

Tant que cette validation n'a pas eu lieu, la requête n'est pas lancée. Par contre, à partir de l'instant $t_{val}$, la requête se poursuit tant que le défaut est toujours présent ou qu'une temporisation est atteinte pour forcer un retour en mode de régulation standard (boucle ouverte) si le système diverge quelle qu'en soit la raison.

A la fin d'une phase de correction par adaptation en boucle fermée, un temporisateur vient interdire un retour immédiat en mode de régulation, interdiction qui peut durer typiquement plusieurs minutes.

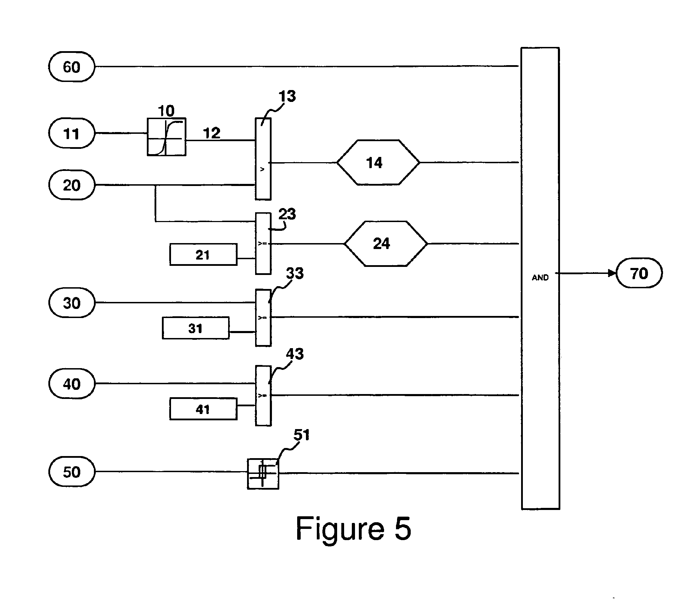

La validation des conditions environnementales est par exemple effectuée selon le mode illustré à la figure 5.

A l'aide d'une cartographie 10, selon la vitesse du véhicule 11, on détermine un seuil de couple maximal de référence 12. Au bloc 20, on considère par ailleurs le couple produit par le moteur, et dans le comparateur 13, on vérifie si ce couple 20 produit est bien inférieur au couple maximal 12.

Ce couple 20 est par ailleurs comparé dans le comparateur 23 à un seuil de couple minimal 21.

Au bloc 30 on considère de plus une température caractéristique de l'état de chauffe du moteur, comme par exemple la température du liquide de refroidissement. Dans un comparateur 33, cette température est comparée à un seuil de température minimale du moteur 31.

De même, au bloc 40, on a en entrée, le régime moteur, qui dans un comparateur 43 est comparé avec un seuil minimal de régime moteur 41.

Comme schématisés par les blocs 14 et 24, avantageusement on opère un filtre pour vérifier que les conditions de couple (minimum et maximum) sont satisfaites pendant une certaine durée de référence (de par exemple 5s), ceci afin de vérifier à nouveau que les conditions de roulage sont effectivement stabilisées. A noter qu'au-delà de quelques secondes, un conducteur va typiquement varier quelque peu sa pression sur la pédale de frein, même de façon non intentionnelle, et qu'alors, il devient plus difficile d'estimer si la phase d'accélération est stable ou non.

A noter que ces paramètres d'entrée 10, 20, 30 et 40 peuvent correspondent à des paramètres mesurés, déjà utilisés par le contrôle moteur, ou à des valeurs estimées.

Au bloc 50, on considère la température du catalyseur SCR (à nouveau mesurée ou estimée sur la base des caractéristiques de fonctionnement du moteur et de l'historique immédiat de fonctionnement pour tenir compte de ce que le catalyseur présente une certaine inertie thermique et que par conséquent, sa température n'est pas nécessairement identique à celle des gaz d'échappement). Cette température peut également être estimée sur la base de mesures en dehors du catalyseur proprement dit, par exemple en des points de la ligne d'échappement entourant le catalyseur).

Au bloc 51, cette température du catalyseur SCR est comparée avec une température de référence, qui de préférence n'est pas fixe mais fournie par une cartographie spécifique afin de tenir compte par exemple de l'état de vieillissement du catalyseur.

Enfin, on peut prévoir également un bloc 60 activé manuellement (c'est-à-dire au moyen directement d'un bouton de commande ou d'une commande électronique envoyée par exemple par un équipement de test) afin de forcer la désactivation du système pour interdire temporairement toute tentative de correction.

Enfin, dans le bloc 70, on vérifie si l'ensemble des conditions sont bien satisfaites.

En mettant une stratégie de supervision des corrections de la masse estimée de stockage de $NH_3$ dans le catalyseur SCR, il devient possible de corriger l'estimation de la masse de $NH_3$ de façon adaptée aux conditions de fonctionnements du système SCR et uniquement lorsqu'il est soumis à des dérives importantes hors de la normale. De plus la temporisation entre deux corrections successives permet de laisser le temps au système de réagir et ainsi d'éviter une majorité de correction pouvant entraîner une divergence du système.

Le procédé selon l'invention permet donc à la fois d'offrir une réponse technique à la volonté de contrôler les corrections réalisées sur le système de traitement des $NO_x$ de façon maîtrisée pour s'assurer que l'ensemble des véhicules réalise les niveaux de $NO_x$ en vigueur et une réponse économique en dimensionnant les composants du système au plus juste, c'est-à-dire sans devoir respecter des normes très strictes pour tous les composants du système afin d'avoir à éviter des recalages.

**Revendications**

1. Procédé de contrôle d'un système de traitement des $NO_x$ présents dans des gaz d'échappement d'un moteur à combustion interne, ledit système comportant des moyens pour introduire dans la ligne d'échappement un agent réducteur en amont d'un catalyseur de réduction selective des $NO_x$, ledit procédé comportant un contrôle en boucle ouverte de l'injection, une estimation de l'efficacité du traitement et la comparaison de celle-ci par rapport à un potentiel de conversion maximale obtenu si le rapport entre la quantité de réducteur injectée et la quantité de $NO_x$ dans les gaz respecte une consigne donnée et si la masse d'agent réducteur stockée dans le catalyseur respecte une consigne de stockage donnée, **caractérisé en ce que** si un défaut du traitement est observé, à savoir un écart significatif entre la conversion maximale et l'efficacité estimée, et si des conditions de correction sont remplies, à savoir des conditions environnementales permettant à la fois de valider la lecture de l'efficacité et de déclencher la correction dans des conditions garantissant une certaine stabilité des émissions de $NO_x$ tant que l'on opère en boucle fermée, on déclenche une requête de correction de la consigne de stockage de réducteur.

2. Procédé selon la revendication 1, **caractérisé en ce que** la requête en correction opère un ajustement de la consigne de stockage selon un contrôle en boucle fermée.

3. Procédé selon l'une des revendications précédentes, **caractérisé en ce que** lesdites conditions environnementales comportent une température du catalyseur de réduction sélective comprise dans une plage de référence donnée.

4. Procédé selon l'une des revendications précédentes, **caractérisé en ce que** lesdites conditions environnementales comportent au moins une des conditions suivantes : un régime moteur supérieur à un régime minimal et une vitesse du véhicule supérieure à une vitesse minimale donnée.

5. Procédé selon l'une quelconque des revendications précédentes, **caractérisé en ce que** lesdites conditions environnementales comportent au moins une des conditions suivantes : un couple moteur supérieur à un seuil de couple minimal et un couple moteur inférieur à un seuil de couple maximal.

6. Procédé selon la revendication 5, **caractérisé en ce que** les conditions de couple ne sont validées que si le couple moteur reste supérieur à la valeur de seuil minimal et/ou inférieur à la valeur de couple maximal pendant une durée prédéfinie.

7. Procédé selon la revendication 6, **caractérisé en ce que** ladite durée est comprise entre 3 et 7s.

8. Procédé selon l'une quelconque des revendications précédentes, **caractérisé en ce que** parmi les conditions environnementales figure une non-interdiction manuelle.

9. Procédé selon l'une quelconque des revendications précédentes, **caractérisé en ce que** l'autorisation de déclenchement de la requête de correction est subordonnée à l'écoulement d'une durée minimale depuis l'arrêt d'une requête en correction.

**Patentansprüche**

1. Steuerverfahren eines Systems zu Behandlung der NOx, die in den Abgasen eines Verbrennungsmotors vorhanden sind, wobei das System Mittel umfasst, um in die Abgasleitung ein Reduktionsmittel vorgelagert von einem Katalysator mit selektiver Reduktion der NOx einzuführen, wobei das Verfahren eine Steuerung mit offenem Regelkreis der Injektion umfasst, eine Schätzung der Wirksamkeit der Behandlung und den Vergleich dieser mit Bezug auf ein maximales Konversionspotenzial, das erhalten wird, wenn der Bezug zwischen der injizierten Menge von Reduktionsmittel und die Menge von NOx in den Gasen einen vorgegebenen Einstellwert einhält, und wenn die Masse des Reduktionsmittels, die in dem Katalysator gelagert ist, einen gegebenen Lager-Einstellwert einhält, **dadurch gekennzeichnet, dass**, wenn ein Defekt der Behandlung beobachtet wird, d.h. eine bedeutende Abweichung zwischen der maximalen Konversion und der geschätzten Wirksamkeit, und wenn die Korrektionsbedingungen erfüllt sind, d.h. Umweltbedingungen, die gleichzeitig die Validierung der Ablesung der Wirksamkeit und die Auslösung der Korrektur in den Bedingungen ermöglicht, die eine bestimmte Stabilität der NOx-Emissionen garantieren, solange im geschlossenem Regelkreis operiert wird, wird eine Anfrage zur Korrektur des Lager-Sollwerts des Reduktionsmittels ausgelöst.

**2.** Verfahren nach Anspruch 1, **dadurch gekennzeichnet, dass** die Anfrage zur Korrektur einer Einstellung des Lager-Sollwerts gemäß eine Kotrolle mit geschlossenem Regelkreis durchführt.

**3.** Verfahren nach einem der vorhergehenden Ansprüche, **dadurch gekennzeichnet, dass** die Umweltbedingungen eine Temperatur des Katalysators zur selektiven Reduktion umfassen, die in einem bestimmten Referenzbereich liegt.

**4.** Verfahren nach einem der vorhergehenden Ansprüche, **dadurch gekennzeichnet, dass** die Umweltbedingungen mindestens eine der folgenden Bedingungen umfassen: eine Motordrehzahl, die höher als eine minimale Drehzahl ist, und eine Geschwindigkeit des Fahrzeugs, die größer als eine bestimmte minimale Geschwindigkeit ist.

**5.** Verfahren nach einem der vorhergehenden Ansprüche, **dadurch gekennzeichnet, dass** die Umweltbedingungen mindestens eine der folgenden Bedingungen umfassen: ein Motordrehmoment, das größer als eine minimale Drehmomentschwelle ist, und ein Motordrehmoment, das kleiner als eine maximale Drehmomentschwelle ist.

**6.** Verfahren nach Anspruch 5, **dadurch gekennzeichnet, dass** die Drehmomentbedingungen nur validiert sind, wenn das Motordrehmoment höher als der minimale Schwellenwert und/oder kleiner als der maximale Drehmomentwert während deiner vordefinierten Dauer bleibt.

**7.** Verfahren nach Anspruch 6, **dadurch gekennzeichnet, dass** die Dauer zwischen 3 und 7 Sekunden liegt.

**8.** Verfahren nach einem der vorhergehenden Ansprüche, **dadurch gekennzeichnet, dass** unter den Umweltbedingungen eine manuelles Nicht-Verbot steht.

**9.** Verfahren nach einem der vorhergehenden Ansprüche, **dadurch gekennzeichnet, dass** die Genehmigung, die Korrekturanfrage auszulösen dem Ablauf einer minimalen Zeitdauer seit dem Stopp einer Korrekturanfrage unterworfen ist.


**Claims**

**1.** A method for controlling a system for treating the NOx present in the exhaust fumes of an internal combustion engine, said system comprising means for introducing a reducing agent into the exhaust line upstream of a NOx selective catalytic reduction catalyst system, said method involving open-loop control of the injection, estimating the effectiveness of the treatment and comparing this against a maximum conversion potential achieved if the ratio between the amount of reducing agent injected and the amount of NOx in the exhaust fumes complies with a given set point and if the mass of the reducing agent stored in the catalyst system complies with a given storage set point value, **characterised in that** if a treatment error is observed, i.e. a significant deviation between the maximum conversion and the estimated effectiveness, and if correction conditions are met, i.e. environmental conditions both validating the effectiveness reading and triggering the correction in conditions guaranteeing a certain level of stability of the NOx emissions when running in a closed loop, a request to correct the reducing agent storage set point value is triggered.

**2.** A method according to claim 1, **characterised in that** the correction request adjusts the storage set point under closed loop control.

**3.** A method according to one of the previous claims, **characterised in that** said environmental conditions include a selective catalytic reduction catalyst system temperature between a given reference temperature range.

**4.** A method according to one of the previous claims, **characterised in that** said environmental conditions include at least one of the following conditions: an engine speed greater than a minimum speed and a vehicle speed greater than a given minimum speed.

**5.** A method according to any one of the previous claims, **characterised in that** said environmental conditions include at least one of the following conditions: an engine torque greater than a minimum torque threshold and an engine torque lower than a maximum torque threshold.

**6.** A method according to claim 5, **characterised in that** the torque conditions are only validated if the engine torque remains greater than the minimum threshold value and/or lower than the maximum torque value during a predefined period of time.

7. A method according to claim 6, **characterised in that** said period of time is between 3 and 7s.

8. A method according to any one of the previous claims, **characterised in that** the environmental conditions also state that the system is not manually prohibited.

9. A method according to any one of the previous claims, **characterised in that** the authorisation to trigger the correction request is subject to the expiry of a minimum time period after a correction request under correction has ended.

**PréDOC**

*Injecteur d'urée*

AT3

**Capteur NOx**

SCR   DOC   FAP

# Figure 1

# Figure 2

Mesure de l'efficacité

*Défaut d'efficacité détecté (2)*

Observation des conditions de correction

*Conditions de correction remplies (3)*

Mesure du temps à la fin d'une correction

*Temps entre chaque de correction suffisant (4)*

&

Correcteur de masse de NH3

*Requête de correction du modèle de masse de stockage de NH3 (1)*

*Correction du modèle de masse de stockage de NH3*

Modèle de masse de NH3

# Figure 3

Fig. 4-A

A

Temps

Fig. 4-B

$t_{val}$

Temps

Fig. 4-C

Temps

**Temporisation entre chaque correction (4)**

# Figure 4

Figure 5

**EP 2 539 558 B1**

## RÉFÉRENCES CITÉES DANS LA DESCRIPTION

**Documents brevets cités dans la description**

- WO 2009135071 A